(19) Europäisches Patentamt
European Patent Office
Office européen des brevets

(11) Veröffentlichungsnummer: **0 098 946**
**B1**

# (12) EUROPÄISCHE PATENTSCHRIFT

(45) Veröffentlichungstag der Patentschrift: **04.12.85**

(51) Int. Cl.⁴: **C 08 G 77/50**, B 01 J 39/16, B 01 J 39/18

(21) Anmeldenummer: **83105144.6**

(22) Anmeldetag: **25.05.83**

(54) **Sulfonatgruppen-haltige Organopolysiloxane, Verfahren zu ihrer Herstellung und Verwendung.**

(30) Priorität: **13.07.82 DE 3226093**

(43) Veröffentlichungstag der Anmeldung: **25.01.84 Patentblatt 84/4**

(45) Bekanntmachung des Hinweises auf die Patenterteilung: **04.12.85 Patentblatt 85/49**

(84) Benannte Vertragsstaaten: **AT BE CH DE FR GB IT LI NL**

(56) Entgegenhaltungen:
**EP-A-0 065 643**
**FR-A-2 445 336**
**US-A-4 113 696**

**CHEMICAL ABSTRACTS, Band 88, Nr. 12, 20. März 1978, Seite 26, Nr. 74902j, Columbus, Ohio, USA L.P. FINN et al.: "Crosslinked polymer for cation exchangers and redox exchangers"**
**CHEMICAL ABSTRACTS, Band 88, Nr. 6, 6. Februar 1978, Seite 20, Nr. 38429b, Columbus, Ohio, USA L.P. FINN et al.: "Structure and properties of poly(mercaptomethylsilsesquioxane) xerogel"**

(73) Patentinhaber: **Degussa Aktiengesellschaft, Weissfrauenstrasse 9, D-6000 Frankfurt am Main 1 (DE)**

(72) Erfinder: **Panster, Peter, Dr., Im Lochseif 8, D-6458 Rodenbach (DE)**
Erfinder: **Grethe, Horst, Vor der Pulvermühle 3 a, D-6450 Hanau 11 (DE)**
Erfinder: **Kleinschmit, Peter, Dr., Wildaustrasse 19, D-6450 Hanau 9 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue Sulfonatgruppen-haltige Organopolysiloxane, die in ihrer Eigenschaft als starksaure Kationenaustauscher gegenüber bekannten Kationenaustauschern auf Basis organischer Polymersysteme oder gegenüber bisher beschriebenen Systemen auf Basis anorganischer Trägermaterialien eine Reihe von Vorteilen besitzen. Gleichzeitig werden Verfahren zur Herstellung dieser neuen Produkte sowie deren Verwendung beschrieben.

Starksaure Kationenaustauscher, deren funktionelle Gruppen bekanntlich aus Sulfonsäureeinheiten bestehen, finden in der chemischen Anwendung und Synthese breiten Einsatz z. B. bei der Reinigung und Enthärtung von Wasser und wäßrigen Lösungen, bei der Trinkwasseraufbereitung, bei der Rückgewinnung von aus Lösungen, als fester Säurekatalysator oder als Träger von Wirkstoffen. Die bisher fast ausschließlich verwendeten Typen bestehen im Prinzip stets aus einem organischen, teilweise vernetzten Polystyrol-Grundgerüst, an das Sulfonatgruppen über die Phenylringe gebunden sind.

Diesem Aufbau entsprechend sind die physikalischen und chemischen Eigenschaften dieser Kationenaustauscher geprägt von der organischen Natur des Polymergerüstes, wodurch eine Reihe anwendungstechnischer Nachteile bedingt sind, wie z. B. eine relativ niedrige Temperaturbeständigkeit von ca. 100 bis 150°C, eine teilweise große Empfindlichkeit gegenüber chemischen Angriffen und Bakterienbefall, die mit einem vollständigen Abbau der Matrix enden können, Löslichkeit in bestimmten Lösungsmitteln unter drastischeren Bedingungen, starke Quellbarkeit und Abhängigkeit des Austauschervolumens von der Art des Kations, Notwendigkeit der Quellung, um die funktionellen Gruppen zugänglich zu machen und deshalb Nichteinsetzbarkeit in bestimmten organischen Lösungsmitteln. Organische Polymere dieser Art weisen darüber hinaus einen gravierenden Nachteil noch insofern auf, als im Hinblick auf die immer knapper werdenden Erdöl- und Kohlevorräte eine Verfügbarkeit geeigneter Rohstoffe auf längere Sicht nicht unbedingt gewährleistet ist, so daß generell eine Umstellung dieser Systeme auf eine anorganische Matrix, hergestellt aus nahezu unbegrenzt vorhandenen Rohstoffen, wünschenswert wäre.

Anorganische Polymersysteme, wie z. B. pyrogene oder gefällte Kieselsäure, Aluminiumoxid, Titandioxid usw. besitzen auch andere Vorzüge, wie festliegende starre Struktur, Unquellbarkeit oder nur geringe Quellbarkeit, hohe Temperatur- und Alterungsbeständigkeit, Unlöslichkeit in organischen Lösungsmitteln, Wasser und starken Säuren sowie leichte Zugänglichkeit der eventuell vorhandenen funktionellen Gruppen, da diese meist an der Oberfläche sitzen. Unter diesen Aspekten erscheint es auch verständlich, daß starksaure Ionenaustauscher auf Basis anorganischer Materialien bereits synthetisiert worden sind, wie aus der europäischen Patentanmeldung 0 008 902 oder der britischen Patentschrift 1 506 226 ersichtlich ist.

Nachteilig wirkt sich in diesen Fällen allerdings die Tatsache aus, daß die Beladbarkeit anorganischer Materialien aufgrund der relativ geringen Anzahl funktioneller Gruppen nur sehr gering ist, denn entsprechende starksaure Kationenaustauscher besitzen in der $H^+$-Form eine maximale Kapazität von nur 0,5—0,6 meq/g. Da die Verankerung der $SO_3H$-tragenden Gruppe auf der Trägeroberfläche aus sterischen Gründen im statistischen Mittel nur über eine Si—O—Si-Einheit erfolgt, ist darüber hinaus stets die Gefahr ihrer Loslösung gegeben.

Der Stand der Technik auf dem Ionenaustauschersektor ist in Übersichtsform z. B. in Ullmanns Enzyklopädie der technischen Chemie, 4. Aufl., Bd. 13, S. 279 oder in Chem.-Ing.-Techn. 51, 7, 728 (1979) beschrieben.

Es konnten nun neue starksaure Kationenaustauscher mit einem Organopolysiloxan-Gerüst gefunden werden, die die Vorzüge vorstehend beschriebener anorganischer Typen ebenfalls aufweisen, jedoch nicht ihre Nachteile, denn ihre Kapazität ist um ein vielfaches höher und die Verankerung der $SO_3^-$-tragenden organischen Gruppen erfolgt über ein trivalent in die Matrix eingebautes Si-Atom und ist dementsprechend fester. Darüberhinaus kann die Stabilität der Matrix durch den Einbau sogenannter Vernetzer in Gestalt keine Sulfonsäuregruppen-tragender di-, tri- und tetravalent eingebundener Silicium-, Titan- und Aluminiumeinheiten erhöht, wie auch die $SO_3^-$-Gruppendichte sowie die spezifische Oberfläche und Porosität durch diese Maßnahme beeinflußt werden.

Diese neuen Ionenaustauscher-Vertreter können erfindungsgemäß durch Oxidation von ein Organopolysiloxan-Grundgerüst aufweisenden Di-, Tri- und Tetrasulfidverbindungen erhalten werden.

Gekennzeichnet sind diese erfindungsgemäßen Organopolysiloxane im einzelnen dadurch, daß sie gleiche oder verschiedene Einheiten der allgemeinen Formel

$$(O_{3/2}Si—R^1—SO_3^-)_x M^{x+} \qquad (1)$$

enthalten, in der $R^1$ für eine lineare oder verzweigte Alkylengruppe mit 1 bis 12 C-Atomen, eine Cycloalkylengruppe mit 5 bis 8 C-Atomen oder für Einheiten

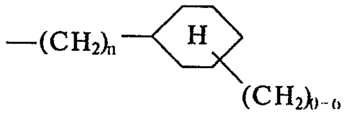

bzw.

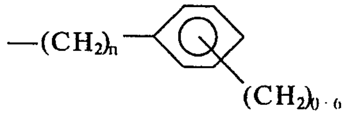

steht, in denen n eine Zahl von 1 bis 6 sein kann und die Zahl der Schwefel-ständigen Methylengruppen angibt, x in Abhängigkeit von M eine Zahl von 1 bis 4 bedeutet und M für Wasserstoff oder ein 1–4-wertiges Metallion steht und die freien Valenzen der Sauerstoffatome durch Siliciumatome weitere Gruppen der Formel (1) und/oder durch vernetzende Brückenglieder

| | | | | | |
|---|---|---|---|---|---|
| $SiO_{4/2}$ | oder | $R'SiO_{3/2}$ | oder | $R'_2SiO_{2/2}$ | bzw. |
| $TiO_{4/2}$ | oder | $R'TiO_{3/2}$ | oder | $R'_2TiO_{2/2}$ | bzw. |
| $AlO_{3/2}$, | | | | | |

wobei R′ eine Methyl- oder Ethylgruppe ist und/oder durch Di-, Tri- und Tetrasulfideinheiten der allgemeinen Formel

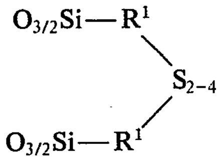

(2)

in der die Brückenglieder $R^1$ denselben Bedeutungsumfang wie bei Formel (1) haben und gleich oder verschieden sein können, abgesättigt sind und das Verhältnis der Summe der Si-Atome in Formel (1) und (2) zu den Brückenatomen Silicium, Titan und Aluminium 1 : 0 bis 1 : 10 betragen kann.

Das Verhältnis der Sulfonatgruppen-tragenden Einheiten nach Formel (1) zu den im Polymerverband gegebenenfalls vorhandenen Si-, Ti- oder Al-haltigen Vernetzergruppen und den Di-, Tri- und Tetrasulfideinheiten nach Formel (2) wird nach unten dadurch begrenzt, daß beim Vorliegen der $H^+$-Grundform, d. h. wenn x = 1 und M = H, mindestens eine Kapazität von 0,1 meq $H^+$/g Organopolysiloxan und eine Höchstkapazität in Abhängigkeit von der Gruppe $R^1$ gegeben ist, wenn praktisch keine Einheiten nach Formel (2) und keine vernetzenden Si-, Ti oder Al-haltigen Brückenglieder im Feststoff vorhanden sind. In der Praxis ist dies jedoch nicht der Fall, da es im Hinblick auf die physikalischen Eigenschaften, wie z. B. die spezifische Oberfläche, die Temperaturbeständigkeit sowie die Beständigkeit der Matrix gegen An- oder Auflösung in wäßrigen Medien und hinsichtlich der raschen Zugänglichkeit aller vorhandenen $SO_3^-$-Gruppen wünschenswert ist, wenn Si-, Ti- oder Al-haltige Vernetzergruppen und/oder Di-, Tri- und Tetrasulfideinheiten nach Formel (2) im Polymerverband vorhanden sind. Von den anwendungstechnischen Eigenschaften her geeigneter sind also erfindungsgemäße Organopolysiloxane mit einer Kapazität von mindestens 0,1 meq $H^+$/g Organopolysiloxan bis höchstens 5 meq $H^+$/g Organopolysiloxan und besonders bevorzugt werden Vertreter mit einer Kapazität von mindestens 0,5 meq $H^+$/g und höchstens 3,5 meq $H^+$/g Organopolysiloxan.

Von der Zugänglichkeit der entsprechenden Vorstufen her gesehen wiederum bevorzugt sind Vetreter dieser neuen Kationenaustauscher, bei denen die Gruppen $R^1$ in Formel (1) und (2) miteinander identisch sind, d. h. daß nur eine Sorte $SO_3^-$-tragender Gruppen im polymeren Feststoff vorhanden ist, und hierunter insbesondere solche, bei denen $R^1$ für eine Propylengruppe steht, da diese von der Rohstoffseite her besonders leicht erhalten werden können, denn die Synthese der Vorstufen kann ausgehend von Allylchlorid und Trichlorsilan, z. B. gemäß den Gleichungen

$$CH_2{=}CH{-}CH_2Cl + HSiCl_3 \xrightarrow{Pt/C} Cl_3Si{-}CH_2{-}CH_2{-}CH_2Cl \quad (1)$$

$$\begin{array}{c} Cl_3Si{-}CH_2CH_2CH_2Cl + 3\,C_2H_5OH \\ \downarrow \\ (H_5C_2O)_3Si{-}CH_2CH_2CH_2Cl + 3\,HCl \end{array} \quad (II)$$

$$\begin{array}{c} 2(H_5C_2O)_3Si{-}CH_2CH_2CH_2Cl + Na_2S_{2-4} \\ \downarrow \\ [(H_5C_2O)_3Si{-}(CH_2)_3]_2S_{2-4} + 2\,NaCl \end{array} \quad (III)$$

$$\begin{array}{c} m(H_5C_2O)_3Si{-}(CH_2)_3\,{}_2S_{2-4} + m \cdot 3\,H_2O \\ \downarrow \\ \{[O_{3/2}Si{-}(CH_2)_3]_2S_{2-4}\}_m + m \cdot 6\,C_2H_5OH \end{array} \quad (IV)$$

erfolgen. Durch Oxidation des erhaltenen polymeren Di-, Tri- oder Tetrasulfids mit geeigneten Oxidationsmitteln wird schließlich das gewünschte $SO_3^-$-Gruppen-enthaltende Organopolysiloxane erhalten, wobei besonders leicht direkt Produkte erhalten werden können, bei denen das Gegenion $H^+$ ist, also $M^{x+}$ für $H^+$ steht.

Die monomeren Vorstufen der polymeren Di-, Tri- und Tetrasulfide sind prinzipiell bekannte Verbindungen, die nach gängigen Verfahren, wie z. B. in den DE-AS 21 41 159, 21 41 160, 27 12 866, 24 05 758, in der deutschen Patentschrift 25 42 534 oder von M. Schmidt und M. Wieber in Inorg. Chem. 1, 909 (1962) beschrieben, synthetisiert werden können.

Aus ökonomischen und teilweise auch ökologischen Gründen besonders bevorzugt sind weiterhin generell die durch Oxidation der Disulfide nach Formel (2) erhaltenen Kationenaustauschermaterialien, bei denen die beiden Gruppen $R^1$ jeweils die gleiche Bedeutung haben, da bei deren Herstellung die jeweils geringste Menge an Oxidationsmittel benötigt wird und gleichzeitig keine oder nur geringe Mengen an $SO_3$ bzw. $H_2SO_4$ anfallen, was im Fall der Verwendung der Tri- bzw. Tetrasulfide, bedingt durch die gleichzeitige Oxidation des mittleren Schwefelatoms bzw. der mittleren Schwefelatome, stets der Fall ist. Da aus den vorstehend genannten Gründen keine vollständige Oxidation aller im Feststoff vorhandener Di-, Tri- und Tetrasulfidgruppen wünschenswert ist und somit stets ein bestimmter Anteil derselben auch im Endprodukt verbleibt, ist es im Hinblick auf den Einsatz dieser neuen Kationenaustauscher günstiger, wenn anstelle der relativ leicht Schwefel-abgebenden Tri- oder Tetrasulfideinheiten die relativ inerte Disulfidgruppe anwesend ist. Eine Verwendung der Tri- bzw. Tetrasulfide kann jedoch im Hinblick auf die Steuerung des Oxidationsprozesses anhand einer Verfolgung der Zunahme des Säureanfalls, Vorteile haben.

Bezüglich der Stabilität des Kationenaustauschermaterials gegenüber An- oder Auflösen bei erhöhter Temperatur in Wasser oder polaren organischen Solvenzien ist von Vorteil, wenn das nach der Oxidation vorliegende, $SO_3^-$-Gruppen-enthaltende Produkt direkt nach seiner Herstellung in Verbindung mit der Trocknung oder erst vor seiner Verwendung einer Temperung in Gestalt einer 1stündigen bis zu 4tägigen Behandlung bei einer Temperatur von mindestens 150°C bis maximal 450°C, gegebenenfalls unter Verwendung von Vakuum, ausgesetzt worden ist. Bei der Temperatur findet nämlich eine weitere Dehydratisierung bzw. eine Abspaltung von noch in der polymeren Substanz vorhandenen Alkoxigruppen in Gestalt des entsprechenden Alkohols bei gleichzeitiger Ausbildung von Siloxanbindungen statt, was analog zum Ergebnis bekannter Temperaturmaßnahmen bei einfachen Kieselsäuren oder -gelen, mit einer Erhöhung der Hydrolyse- bzw. Solvolysebeständigkeit verbunden ist.

Gegenstand der Erfindung sind auch Verfahren zur Herstellung der neuen Kationenaustauschermaterialien. Nach dem ersten Verfahren werden polymere Di-, Tri- oder Tetrasulfide, bestehend aus Einheiten der Formel

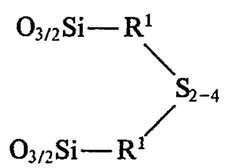

(2)

bei denen die beiden Gruppen $R^1$ gleiche oder verschiedene Bedeutung haben und für eine lineare oder verzweigte Alkylengruppe mit 1 bis 12 C-Atomen, eine Cycloalkylengruppe mit 5—8 C-Atomen oder für Einheiten

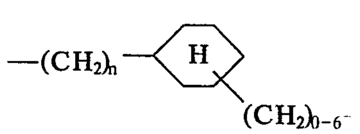

bzw.

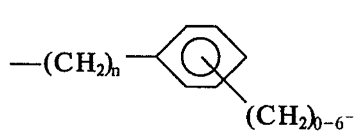

stehen, in denen n eine Zahl von 1 bis 6 sein kann und die Zahl der Schwefel-ständigen Methylengruppen angibt, und die freien Valenzen der Sauerstoffatome durch Siliciumatome weiterer Gruppen der Formel (2) und/oder durch vernetzende Brückenglieder

$SiO_{4/2}$ oder $R'SiO_{3/2}$ oder $R'_2SiO_{2/2}$ bzw.

$TiO_{4/2}$ oder $R'TiO_{3/2}$ oder $R'_2TiO_{2/2}$ bzw.

$AlO_{3/2}$,

abgesättigt sind,

wobei R′ eine Methyl- oder Ethylgruppe ist, suspendiert in Wasser und/oder einem Alkohol mit 1 bis 5 C-Atomen, mit stöchiometrischen, unterschüssigen oder überschüssigen Mengen, im letzten Fall bis

zur 20fachen der zur vollständigen Oxidation benötigten Menge, eines zumindest teilweise gelösten Oxidationsmittels, dessen Oxidationspotential mindestens ausreicht, um C-gebundenen Schwefel der formalen Oxidationsstufe −1 in C-gebundenen Schwefel der formalen Oxidationsstufe +4 zu überführen, bei Temperaturen von −78 bis 250, vorzugsweise −30 bis 150, insbesondere 0 bis 100°C und einem pH-Wert von höchstens 11, während einiger Minuten bis mehrerer Tage, gegebenenfalls unter einem Druck, welcher der Summe der Partialdrücke der Reaktionskomponenten bei der Reaktionstemperatur entspricht, umgesetzt werden, worauf der Feststoff von der flüssigen Phase abgetrennt, extrahiert oder gewaschen, dann gegebenenfalls unter Vakuum, bei Temperaturen von Raumtemperatur bis 200°C getrocknet und 1 Stunde bis 4 Tage, gegebenenfalls im Vakuum, bei Temperaturen von 150–450°C getempert wird, wobei Extraktion bzw. Wäsche und Trocknung sowie bedarfsweise die Temperung gegebenenfalls wiederholt werden und daß das Produkt schließlich bei bzw. nach Bedarf gemahlen und/oder klassifiziert sowie nachgetempert wird, wobei eine oder mehrere der nach der Umsetzung vorgesehenen Maßnahmen unterbleiben oder in einer anderen Reihenfolge durchgeführt werden können.

Es kann also z. B. auch das Kationenaustauschermaterial erst getrocknet und dann nach gängigen Techniken gemahlen und/oder klassifiziert werden. Im Fall der Herstellung eines möglichst feinteiligen Produkts kann die Mahlung auch direkt während oder nach der Oxidation in Suspension oder auch direkt nach Abtrennung von der flüssigen Phase in noch feuchtem Zustand durchgeführt werden.

Hinsichtlich der Oxidationsgeschwindigkeit des polymeren Sulfids zeigt sich erwartungsgemäß eine deutliche Abhängigkeit von der Teilchenfeinheit in der Weise, daß mit kleinerer Korngröße eine beschleunigte Oxidation feststellbar ist. Oxidationsmittel, mit denen bei allen in dieser Anmeldung offenbarten Herstellungsverfahren eine oxidative Spaltung der Di-, Tri- und Tetrasulfideinheit erreicht werden kann, sind z. B. Wasserstoffperoxid, Natriumperoxid, Natriumpersulfat, Natriumchlorit oder Natriumhypochlorit, Brom bzw. Bromwasser, oder die verschiedenen Arten von anorganischen Persäuren, wie z. B. Perschwefelsäure oder Perphosphorsäure und organischen Persäuren, wie z. B. Peressigsäure, Perpropionsäure oder Perbenzoesäure oder Gemische von $H_2O_2$ mit anorganischen oder organischen Säuren oder Persäuren. Besonders bevorzugt unter diesen verwendbaren Oxidationsmitteln ist aus ökonomischen und ökologischen Gründen verständlicherweise das Wasserstoffperoxid, da es einerseits ein relativ billiges Oxidationsmittel darstellt und andererseits bei seinem Einsatz nur in das unbedenkliche Endprodukt Wasser überführt wird.

Ausgehend von einem typischen unvernetzten Polydisulfidorganosiloxan kann die bei dem Oxidationsprozeß an einer Polymereinheit ablaufende Reaktion beispielhaft durch folgende Gleichung beschrieben werden:

$$[O_{3/2}Si-CH_2CH_2CH_2]_2S_2 + 5\,H_2O_2$$
$$\downarrow$$
$$2\,O_{3/2}Si-CH_2CH_2CH_2-SO_3H + 4\,H_2O$$

Analoges gilt auch für organische Persäuren, die bei dieser Verwendung in die entsprechenden organischen Säuren überführt werden, die leicht wieder recycliert werden können oder für eine Kombination von Wasserstoffperoxid mit organischen Säuren oder Persäuren.

Zur Vermeidung einer vollständigen Durchoxidation aller vorhandenen Schwefelatome, was, wie bereits erwähnt, insbesondere im Hinblick auf die Stabilität des Produkts gegenüber An- oder Auflösung in Wasser und protischen Solvenzien von Nachteil wäre, hat sich eine Kontrolle des Oxidationsverlaufs über den pH-Wert der Oxidationssuspension bewährt, da dieser mit zunehmendem Oxidationsgrad abnimmt. Nach dem Erreichen des empirisch ermittelten optimalen pH-Wertes wird die Suspension verdünnt und/oder der Feststoff sofort nach den genannten Techniken von der flüssigen Phase abgetrennt, gewaschen und in der beschriebenen Weise weiterbehandelt.

In einer vereinfachten Variante des vorhin beschriebenen Verfahrens erfolgt die Oxidation nicht in einer Suspension der polymeren Di-, Tri- oder Tetrasulfide, sondern einfach durch direktes Benetzen dieser Feststoffe mit einer Lösung von stöchiometrischen, unterschüssigen oder überschüssigen Mengen, im letzten Fall bis zur 20fachen der zur vollständigen Oxidation benötigten Menge, eines Oxidationsmittels, dessen Oxidationspotential mindestens ausreicht, um C-gebundenen Schwefel der formalen Oxidationsstufe −1 in C-gebundenen Schwefel der formalen Oxidationsstufe +4 zu überführen, in Wasser oder einem Alkohol mit 1 bis 5 C-Atomen.

Der benetzte Feststoff wird anschließend bei Temperaturen von −78 bis 250, vorzugsweise −30 bis 150, insbesondere 0 bis 100°C, während einiger Minuten bis mehrerer Tage, gegebenenfalls unter Vakuum, mit dem Oxidationsmittel umgesetzt. Hierauf wird er, gegebenenfalls wiederum unter Vakuum, bei Temperaturen von Raumtemperatur bis 200°C getrocknet. Es schließt sich ein 1 Stunde bis 4 Tage dauerndes Tempern bei Temperaturen von 150 bis 450°C an, welches gegebenenfalls im Vakuum vorgenommen wird. Das Produkt kann anschließend gemahlen und/oder klassifiziert sowie gegebenenfalls ein- oder mehrmals mit Wasser oder einem Alkohol mit 1 bis 5 C-Atomen extrahiert oder gewaschen und getrocknet und/oder nachgetempert werden. Dabei können eine oder mehrere der nach der Umsetzung aufgezählten Maßnahme unterbleiben oder in einer anderen Reihenfolge durchgeführt werden.

Ein alternatives Verfahren zur Herstellung der erfindungsgemäßen Sulfonatgruppen-haltigen Organopolysiloxane sieht dagegen zunächst eine Umsetzung der Suspension der bereits derfinierten polymeren, gegebenenfalls vernetzten Di-, Tri- und Tetrasulfide mit den genannten Oxidationsmitteln auf die beim ersten Verfahrenstyp angegebene Weise vor.

Im Gegensatz zu dem erstbeschriebenen Verfahren wird hier jedoch der Oxidationsprozeß nicht durch Abtrennen des Feststoffs von der flüssigen Phase unterbrochen, sondern die Suspension oder Lösung wird nach Erreichen eines bestimmten Oxidationsgrades — ermittelbar durch pH-Kontrolle — möglichst rasch bei Temperaturen von Raumtemperatur bis 150°C, vorzugsweise unter Vakuum, eingedampft und der verbleibende Feststoff, gegebenenfalls im Vakuum, bei Temperaturen von Raumtemperatur bis 200°C getrocknet und anschließend über einen Zeitraum von 1 Stunde bis zu 4 Tagen, gegebenenfalls im Vakuum, bei mindestens 150°C bis maximal 450°C getempert. Das getemperte Material wird anschließend mehrere Stunden mit Wasser oder wäßriger Säurelösung und/oder einem Alkohol mit 1 bis 5 C-Atomen, vorzugsweise bei erhöhter Temperatur (z. B. Anwendung von heißem bis siedendem Wasser), extrahiert, um lösliche Bestandteile zu entfernen. Dann wird, gegebenenfalls unter Vakuum, getrocknet sowie gegebenenfalls gemahlen und/oder klassifiziert sowie nachgetempert, wobei eine oder mehrere der auf den Eindampfvorgang folgenden Maßnahmen unterbleiben oder in einer anderen Reihenfolge durchgeführt werden können.

Im Hinblick auf die Stabilität der erhaltenen Ionenaustauschermaterialien gegenüber Auflösen in Wasser und anderen protischen Medien erweist es sich bei dieser Verfahrensvariante unter Umständen von Vorteil, der Oxidationssuspension kurz vor dem Eindampfen Tetramethyl- oder Tetraethylsilikat oder auch Kieselsäuresol oder Wasserglas in einer Menge von 10 bis zu 300 Gew.-% der ursprünglich eingesetzten Menge an polymerem, gegebenenfalls bereits Vernetzer der vorstehend genannten Art enthaltenden Di-, Tri- und Tetrasulfid, zuzusetzenden. Die daraus entstehenden $SiO_2$-Einheiten besitzen ebenfalls den Charakter stabilisierender Vernetzer und Bindemittel. Bei Zusatz dieser vernetzend wirkenden Siliciumverbindungen soll jedoch auch in diesem Fall die eingangs geforderte Obergrenze von maximal 10 Vernetzeratomen gegenüber der Summe der Si-Atome aus Formeln (1) und (2) nicht überschritten werden.

Nach den drei vorstehend beschriebenen Oxidationsprozessen werden die neuen starksauren Kationenaustauscher in der $H^+$- und /oder bereits in einer ausgetauschten Form erhalten. Letzteres ist dann der Fall, wenn das Oxidationsmittel ein Salz ist oder Wasserglas als Bindemittel zugesetzt wird, mit deren Kation(en) bereits ein $H^+$-Austausch stattfinden kann.

Nach einer weiteren Verfahrensvariante sind alle übrigen beanspruchten Austauscherformen zugänglich, die nicht direkt bei der Herstellung erhalten werden. Diese Variante besteht darin, daß man die nach den beschriebenen Verfahren erhaltenen Sulfonatgruppen-tragenden Organopolysiloxane in ungetrockneter, getrockneter und/oder getemperter, gemahlener, ungemahlener und/oder klassifizierter Form mit einem anorganischen oder organischen Reagenz, welches in ein Kation oder Anion dissoziieren kann, zum gegenseitigen Austausch der Kationen nach dem statischen oder dynamischen Ionenaustauscherprinzip umsetzt, anschließend wäscht und dann gegebenfalls den Feststoff von der flüssigen Phase abtrennt und gegebenenfalls trocknet sowie in beliebiger Reihenfolge mahlt und/oder klassifiziert und tempert.

Dieses Ionenaustauschverfahren beinhaltet auch einen Ionenaustausch in Gestalt einer Neutralisation, wie er bei bereits bekannten Ionenaustauscherharzen nach den statischen oder dynamischen Prinzip vollzogen werden kann.

Man kann also den Ionenaustausch in einer bewegten Suspension der polymeren Sulfonat-Ausgangsverbindung mit dem zumindest teilweise gelösten dissoziationsfähigen Reagenz durchführen. Dabei wird das unlösliche Sulfonatgruppen-tragende Material mit Organopolysiloxan-Grundstruktur in wäßriger Suspension oder einem organischen Suspensionsmedium bevorzugt polarer Natur mit der wenigstens teilweise gelösten Reaktionskomponente, mit der der Austausch durchgeführt werden soll, in Kontakt gebracht. Anschließend wird der Feststoff abgetrennt und gegebenenfalls nochmals mit frischer Lösung des Reaktionspartners gerührt. Dieser Vorgang wird so oft wiederholt, bis der Ionenaustausch quantitativ vollzogen ist. Anschließend kann der Feststoff nach gängigen Techniken, wie Filtrieren, Zentriffugieren und/oder Dekantieren abgetrennt, salzfrei gewaschen und bei Raumtemperatur oder erhöhter Temperatur bis 300°C, gegebenenfalls unter Verwendung von Vakuum, getrocknet, bei einer Temperatur von 150°C—450°C getempert, gemahlen sowie klassifiziert werden.

Arbeitet man nach dem dynamischen Prinzip, so setzt man die Sulfonatgruppen-haltige Ausgangsverbindung als Austauscherbett ein und bringt sie mit der Lösung des zumindest teilweise gelösten Reaktionspartners in Kontakt. Auch hier können wie bei den nach der statischen Methode erhaltenen Produkten Nachbehandlungen im erwähnten Umfang vorgesehen werden.

Im allgemeinen können die nach der Trocknung noch durchgeführten Behandlungsschritte auch in der Reihenfolge vertauscht sein oder können teilweise unterbleiben.

Verwendet man als Austauscherbett eine Austauschersäule, so muß, um einen ausreichenden Durchfluß zu gewährleisten, das polymere Ausgangsprodukt eine bestimmte Mindestkorngröße besitzen, die auch in Abhängigkeit von der Säulendimension festzulegen ist. Im allgemeinen wird man bei Laborsäulen mit einer Mindestkorngröße von 0,2 mm auskommen. Nach vollzogenem Austausch wird auch hier salzfrei gewaschen und es können dann entweder Nachbehandlungsmaßnahmen oder weitere Austauschmaßnahmen durchgeführt werden. Eine Mahlung der ausgetauschten Produkte kann natürlich nicht nur in trockenem Zustand, sondern auch naß durchgeführt werden.

Auf der Fähigkeit der polymeren Sulfonatgruppen-tragenden Organopolysiloxane zum Kationenaustausch basiert die wichtigste Anwendung dieser neuen Produkte, nämlich der Einsatz als universell nutzbarer Kationenaustauscher, der die Vorteile der sehr temperatur- und lösungsmittelstabilen Matrix, der stark fixierten und gegenüber Ablösen inerten Sulfonatgruppen, der Nichtquellbarkeit in wäßrigen und organischen Medien und der Einsetzbarkeit auch in organischen Medien aufweist.

Demgemäß ist auch Gegenstand der Erfindung die Verwendung der Sulfonatgruppen-tragenden Organopolysiloxane als Kationenaustauscher.

Charakterisieren lassen sich die beschriebenen neuen Kationenaustauscher anhand von Elementaranalysen und anhand der Austauschergebnisse. Ihre Zersetzungspunkte liegen an der Luft bei weit über 200°C und unter Schutzgasatmosphäre bei über 400°C.

Je nach Vorbehandlung besitzen sie Oberflächen von 0,1 bis 2000 $m^2/g$ und Teilchengrößendurchmesser von ca. 1 cm bis kleiner als 1 $\mu m$. Ein Teilchengrößenbereich von 0,1—1,5 mm, wie er bei einer technischen Verwendung als Ionenaustauscher gefordert wird, ist problemlos einstellbar. Die erfindungsgemäßen Kationenaustauscher weisen Kapazitäten im Bereich von ca. 0,1 bis 5 meq $H^+/g$ Organopolysiloxan auf. Bevorzugt haben sie Kapazitäten von ca. 0,5 bis 3,5 meq $H^+/g$ Organopolysiloxan.

Die Erfindung wird nachfolgend anhand von Ausführungsbeispielen zu den einzelnen erfindungsgemäßen Herstellungsvarianten unter Berücksichtigung der grundsätzlich wichtigsten Ausgangsstoffe näher erläutert.

## Beispiel 1

8 g eines 2 Stunden an einer Kugelmühle gemahlenen Organopolysiloxans, bestehend aus Einheiten der Summenformel $S_2[CH_2CH_2CH_2SiO_{3/2}]_2$, wurden in 50 ml entsalztem Wasser suspendiert. Die Suspension wurde mit 154 g 35 %iger, wäßriger Wasserstoffperoxid-Lösung, was der 10fachen der theoretisch benötigten Menge entspricht, versetzt und 7 Stunden bei Raumtemperatur gerührt. Anschließend wurde der Feststoff abfiltriert, mit insgesamt ca. 1 l Wasser gewaschen, 8 Stunden bei 120°C/80 mbar getrocknet, 24 Stunden bei 200°C getempert und dann an einer Hammermühle gemahlen. Es konnten 8,9 g hellbraunes Produkt (80,2 % der bei 100 %iger Oxidation zu erwartenden Menge) erhalten werden, das gemäß Titration mit 0,1 n NaOH-Lösung eine $H^+$-Kapazität von 2,8 meq $H^+/g$ aufwies.

Das Ausgangsmaterial besaß folgende Analysendaten:

| % C | % H | % S | % Si |
|---|---|---|---|
| 27,81 | 4,89 | 24,88 | 21,47 |

Bei vollständiger Oxidation aller Disulfidgruppen zu $SO_3H$-Gruppen wären folgenden Analysendaten zu erwarten gewesen:

| | | | |
|---|---|---|---|
| 20,56 | 4,03 | 18,30 | 16,03 |

Gefunden werden konnten

| | | | |
|---|---|---|---|
| 23,41 | 4,51 | 20,19 | 19,88 |

Bei diesem Beispiel und den folgenden Beispielen wurde der Oxidationsgrad des Ausgangsmaterials durch eine geeignete Versuchsführung absichtlich unter dem theoretisch möglichen Maximalwert gehalten, um einen praktikablen Kompromiß zwischen der $H^+$-Kapazität und der erforderlichen Unlöslichkeit der Polysilonxanmatrix herbeizuführen.

## Beispiel 2

40 g eines feingemahlenen, polymeren, unsymmetrischen Disulfids, bestehend aus Einheiten der Summenformel $S_2[(CH_2)_3SiO_{3/2}]\,[(CH_2)_5SiO_{3/2}]$, wurden in 100 ml Ethanol suspendiert. Die Suspension wurde anschließend mit 250 ml 35 %iger, wäßriger $H_2O_2$-Lösung versetzt und 6 Stunden bei Raumtemperatur gerührt. Anschließend wurde mit 500 ml entsalztem Wasser verdünnt und dann der Feststoff abzentrifugiert, 3 × mit je 200 ml $H_2O$ ausgewaschen und dann 12 Stunden bei 150°C getrocknet. Es wurden 45,6 g braunes Produkt (84,5 % der bei vollständiger Umwandlung aller Disulfidgruppen in $SO_3H$-Gruppen zu erwartenden Menge) erhalten. Die erzielte $H^+$-Kapazität betrug 2,99 meq/g, gemäß Titration mit 0,1 n Natronlauge.

| Analysendaten | % C | % H | % S | % Si |
|---|---|---|---|---|
| Ausgangsmaterial: | 33,89 | 5,85 | 22,07 | 19,46 |
| Theorie bei vollständiger Oxidation zu $SO_3H$-Gruppen: | 25,39 | 4,79 | 16,94 | 14,84 |
| Gefunden: | 28,18 | 5,01 | 17,93 | 16,02 |

Beispiel 3

30 g eines Disulfidgruppen-enthaltenden $SiO_{4/2}$ vernetzten Organopolysiloxans mit einer Korngröße von 0,05–0,6 mm, bestehend aus Einheiten der Summenformel $S_2[(CH_2)_{12}SiO_{3/2}]_2 \cdot SiO_2$ wurden in 100 ml entsalztem Wasser suspendiert. Die Suspension wurde in einem Kühlbad auf +5°C abgekühlt und dann mit 40,4 g, d. h. mit 80 % der zur vollständigen Oxidation der Disulfid-zu $SO_3H$-Gruppen benötigen Menge, 40 %iger, wäßriger Peressigsäure versetzt und 1 Stunde bei dieser Temperatur gerührt. Dann wurden 100 ml $H_2O$ zugesetzt, der Feststoff über eine Saugnutsche abfiltriert, mit insgesamt 500 ml $H_2O$ gewaschen, dann 6 Stunden bei 120°C getrocknet, 48 Stunden bei 250°C getempert und anschließend 6 Stunden am Soxhlet mit Wasser extrahiert sowie erneut 6 Stunden bei 120°C/100 mbar getrocknet. Es konnten 30,7 g (87,2 % der bei vollständiger Umwandlung der Disulfidgruppen in $SO_3H$-Gruppen zu erwartenden Menge) erhalten werden. Gemäß Titration mit 0,1 n Natronlauge besaß der Feststoff eine $H^+$-Kapazität von 1,41 meq/g. Mit Hilfe geeigneter Siebe und Mahlung des Grobanteils erfolgte eine Klassifizierung in die Korngrößen 0,2–0,6 mm, 0,05–0,2 mm und kleiner als 0,05 mm.

| Analysendaten | % C | % H | % S | % Si |
|---|---|---|---|---|
| Ausgangsmaterial: | 50,84 | 8,71 | 11,10 | 14,65 |
| Theorie bei vollständiger Oxidation zu $SO_3H$-Gruppen: | 43,48 | 7,60 | 9,67 | 12,71 |
| Gefunden: | 45,28 | 8,24 | 9,89 | 13,07 |

Beispiel 4

10 g eines polymeren, vernetzten, nicht zerkleinerten Disulfids, bestehend aus Einheiten der Formel

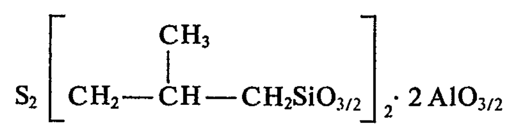

wurden in 800 ml $Br_2$-Wasser, mit einem Gehalt von insgesamt 20,9 g Brom, suspendiert. Die Suspension wurde 1 Stunde bei 50°C magnetisch gerührt, der Feststoff dann abgesaugt, mit insgesamt 300 ml $H_2O$ gewaschen und 6 Stunden bei 120°C/80 mbar getrocknet. Es konnten 9,8 g Produkt (78 % der bei vollständiger Umwandlung aller $S_2$-Gruppen in $SO_3H$-Gruppen) erhalten werden. Gemäß Titration des in der $H^+$-Form anfallenden Sulfonatgruppen-enthaltenden Materials mit 0,1 n-Natronlauge besaß diese Kapazität von 0,91 meq/g.

Das Ausgangsmaterial besaß folgende Analysendaten:

| % C | % H | % S | % Si | % Al |
|---|---|---|---|---|
| 25,83 | 4,76 | 16,21 | 14,13 | 13,44 |

Bei vollständiger Oxidation aller Disulfidgruppen zu $SO_3H$-Gruppen wären folgende Analysendaten zu erwarten gewesen:

| | | | | |
|---|---|---|---|---|
| 20,00 | 3,78 | 13,35 | 11,69 | 11,23 |

Gefunden:

| | | | | |
|---|---|---|---|---|
| 22,16 | 4,08 | 14,76 | 12,71 | 12,09 |

## Beispiel 5

50 g eines Organopolysiloxans, bestehend aus Einheiten der Summenformel

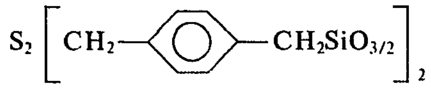

wurden in 200 ml entsalztem Wasser suspendiert. Die Suspension wurde dann mit 60 g Natriumchlorit versetzt, auf Rückflußtemperatur aufgeheizt und 3 Stunden unter Rückfluß gerührt. Anschließend wurde abgekühlt, 300 ml 5 n Schwefelsäure zugesetzt, eine weitere Stunde bei Raumtemperatur gerührt, dann der Feststoff abzentrifugiert, zunächst 2 × mit 100 ml 5 n-$H_2SO_4$ und dann säurefrei gewaschen. Nach 6stündiger Trocknung bei 150°C/100 mbar und 24stündiger Temperung bei 200°C/100 mbar konnten 52,7 g (83,6 % der bei vollständiger Oxidation zu erwartenden Menge) Produkt erhalten werden, das nach Titration mit 0,1 n-Natronlauge eine $H^+$-Kapazität von 1,78 meq/g aufwies.

Das Ausgangsmaterial besaß folgende Analysendaten:

| % C | % H | % S | % Si |
|---|---|---|---|
| 50,69 | 4,76 | 17,21 | 14,23 |

Bei vollständiger Oxidation waren folgende Daten zu erwarten:

| | | | |
|---|---|---|---|
| 40,49 | 3,82 | 13,51 | 11,84 |

Gefunden:

| | | | |
|---|---|---|---|
| 43,02 | 4,09 | 14,10 | 12,82 |

## Beispiel 6

400 ml einer frisch zubereiteten wäßrigen Lösung von Peroxodischwefelsäure, mit einem Gehalt von 44 g $H_2S_2O_8$ wurden bei 5°C mit 25 g eines polymeren Disulfids, bestehend aus Einheiten der Summenformel

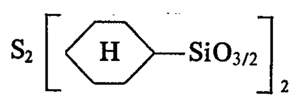

versetzt.

Die Suspension wurde 6 Stunden bei dieser Temperatur gerührt, dann mit 200 ml $H_2O$ verdünnt, der verbleibende Feststoff abzentrifugiert, mit insgesamt 500 ml $H_2O$ säurefrei gewaschen und 10 Stunden bei 150°C/100 mbar getrocknet. Gemäß Titration des in der $H^+$-Form vorliegenden, Sulfonatgruppen enthaltenden Organopolysiloxans (25,6 g) betrug die Kapazität 2,30 meq/g.

Das Ausgangsmaterial besaß folgende Analysendaten:

| % C | % H | % S | % Si |
|---|---|---|---|
| 42,81 | 6,18 | 19,08 | 16,21 |

Bei vollständiger Oxidation aller Disulfidgruppen waren folgende Daten zu erwarten:

| | | | |
|---|---|---|---|
| 33,47 | 5,15 | 14,89 | 13,05 |

Gefunden:

| | | | |
|---|---|---|---|
| 35,89 | 5,48 | 16,01 | 14,32 |

## Beispiel 7

50 g eines Organopolysiloxans, bestehend aus Einheiten der Summenformel

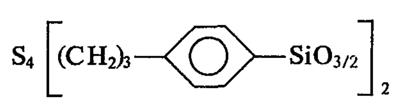

wurden mit 750 g 25 %iger $H_2O_2$-Lösung vereinigt. Die Suspension wurde auf 30°C aufgeheizt und bei dieser Temperatur unter stetiger Kontrolle des pH-Wertes gerührt. Als sich nach 4 Stunden der pH-Wert von 5,5 auf 2,0 reduziert hatte, wurde von dem gerührten Feststoff eine Probe (ca. 2 g) genommen, die mit Wasser gewaschen und dann wie das Restprodukt weiter behandelt wurde. Der verbleibende Feststoff wurde noch 2 Stunden weiter gerührt, bis sich ein pH-Wert von 1,2 eingestellt hatte. Dann wurde abfiltriert, der Feststoff mit insgesamt 1 l Wasser säurefrei gewaschen, dann 5 Stunden bei 150°C/100 mbar getrocknet und 48 Stunden bei 230°C/100 mbar getempert, nochmals mit Wasser ausgewaschen und nochmals unter vorstehend genannten Bedingungen getrocknet. Einschließlich Probe konnten 50,2 g Produkt erhalten werden, was 93,6 % der bei vollständiger Oxidation zu erwartenden Menge entspricht. Gemäß Titration mit 0,1 n NaOH ergaben sich folgende $H^+$-Kapazitäten:

Probe: 1,50 meq $H^+$/g

Hauptmenge: 2,40 meq $H^+$/g

| Analysendaten (Gesamtmenge): | % C | % H | % S | % Si |
|---|---|---|---|---|
| Theorie bei vollständiger Oxidation: | 43,01 | 4,41 | 12,76 | 11,18 |
| Gefunden: | 43,81 | 3,92 | 14,38 | 11,62 |

## Beispiel 8

Aus 50 g eines Organopolysiloxans, bestehend aus Einheiten der Formel

$$S_3[(CH_2)_3SiO_{3/2}]_2 \cdot 0{,}1(H_5C_2)TiO_{3/2}$$

und 500 g 25 %iger wäßrig/methanolischer (1 : 1) $H_2O_2$-Lösung, der 10 g Perbenzoesäure zugesetzt worden waren, wurden analog Beispiel 7 nach Abbruch der Oxidation nach 3 Stunden und beim Erreichen eines pH-Wertes von 1,8 49,4 g an gewünschtem Produkt mit einer $H^+$-Kapazität von 2,1 meq/g erhalten.

| Analysendaten | % C | % H | % S | % Si | % Ti |
|---|---|---|---|---|---|
| Theorie bei vollständiger Oxidation: | 20,65 | 4,05 | 17,78 | 15,58 | 1,33 |
| Gefunden: | 22,04 | 4,53 | 19,24 | 16,70 | 1,41 |

## Beispiel 9

100 g eines Disulfidgruppen-enthaltenden Organopolysiloxans, bestehend aus Einheiten der Summenformel $S_2[(CH_2)_3SiO_{3/2}]_2$ mit einer Korngröße von 0,4–0,6 mm wurden in einem 1 l Glaskolben vorgelegt. Der Kolben wurde an einem Rotationsverdampfer angebracht und ein Vakuum von ca. 100 mbar angelegt. Mit Hilfe eines in den rotierenden Kolben ragenden Teflonröhrchens wurden dann binnen 1 Stunde insgesamt 155 g 35 %ige $H_2O_2$-Lösung auf das Organopolysiloxan aufgesprüht. Unter Verwendung eines Ölbades wurde anschließend die Temperatur des rotierenden Kolbens innerhalb von 3 Stunden auf 120°C gesteigert und weitere 3 Stunden bei dieser Temperatur belassen. Das dunkelbraune Material wurde dann in einem Vakuumtrockenschrank 24 Stunden bei 280°C/100 mbar getempert, dann 6 Stunden mit Wasser am Soxhlet extrahiert und schließlich wieder 4 Stunden bei 150°C/100 mbar getrocknet. Es konnten 98,8 g Produkt (71,2 % der bei vollständiger Oxidation aller Disulfid-Einheiten zu erwartenden Menge) mit einer $H^+$-Kapazität von 1,76 meq/g erhalten werden.

| Analysendaten | % C | % H | % S | % Si |
|---|---|---|---|---|
| Theorie bei vollständiger Oxidation: | 20,56 | 4,03 | 18,30 | 16,03 |
| Gefunden: | 24,98 | 4,95 | 20,04 | 19,87 |

## Beispiel 10

50 g eines Disulfidgruppen-enthaltenden Organopolysiloxans, bestehend aus Einheiten der Summenformel

$S_2[(CH_2)_3SiO_{3/2}]_2$

wurden analog Beispiel 9 mit 180 g einer 40%igen alkoholischen Lösung von Peressigsäure bei 80°C/100 mbar, innerhalb von 2 Stunden unter gleichzeitigem Abdestillieren des verdampfenden Alkohols besprüht. Anschließend wurde die Temperatur bei Normaldruck auf 120°C gesteigert, dann der Feststoff mit insgesamt 1 l $H_2O$ ausgewaschen, 6 Stunden bei 150°C/100 mbar getrocknet und 48 Stunden bei 250°C/100 mbar getempert, dann 5 Stunden mit Wasser am Soxhlet extrahiert und erneut 5 Stunden bei 150°C/100 mbar getrocknet. Es ließen sich 50,6 g Produkt erhalten, gemäß Titration mit 0,1 n Natronlauge eine $H^+$-Kapazität von 1,95 meq /g aufgewiesen.

| Analysendaten: | % C | % H | % S | % Si |
|---|---|---|---|---|
| Theorie bei vollständiger Oxidation: | 20,56 | 4,03 | 18,30 | 16,03 |
| Gefunden: | 23,76 | 4,83 | 20,85 | 18,24 |

## Beispiel 11

200 g eines Organopolysiloxans, bestehend aus Einheiten der Summenformel

$S_2[CH_2CH_2CH_2SiO_{3/2}]_2$

wurden in 1 l ca. 30%iger Natriumhypochloritlösung eingerührt. Anschließend wurde die Mischung innerhalb einer Stunde auf Rückflußtemperatur aufgeheizt und 0,5 Stunden bei dieser Temperatur gerührt. Die inzwischen klare Lösung wurde dann durch Anlegen von leichtem Vakuum eingeengt. Anschließend wurde der feste Rückstand in einen Vakuumtrockenschrank überführt, zunächst 6 Stunden bei 150°C getrocknet, dann 24 Stunden bei 300°C getempert. Nach 6stündiger Extraktion mit Wasser und nochmaliger 4stündiger Trocknung bei 150°C/100 mbar wurden 237,6 g (76,0% der bei vollständiger Oxidation zu erwartenden Menge) des in der $Na^+$-Form vorliegenden Produkts erhalten.

Das Produkt wurde dann über eine Hammermühle geschickt, grob zerkleinert und dann in die Korngröße 0,4—0,6 mm 0,2—0,4 mm, 0,05—0,2 mm und <0,05 mm klassifiziert.

| Analysendaten: | % C | % H | % S | % Si | % Na |
|---|---|---|---|---|---|
| Theorie bei vollständiger Oxidation: | 18,27 | 3,07 | 16,26 | 14,24 | 11,66 |
| Gefunden: | 19,45 | 3,81 | 18,21 | 15,06 | 4,42 |

Das Produkt besaß demzufolge eine Na-Kapazität von 1,92 meq/g.

## Beispiel 12

100 g eines Organopolysiloxans, bestehend aus Einheiten der Summenformel

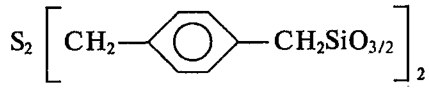

wurden in 1 l 10%iger Wasserstoffperoxidlösung suspendiert. Anschließend wurde die Suspension auf 60°C aufgeheizt und 1 Stunde bei dieser Temperatur gerührt, wobei aus der Suspension eine klare Lösung entstand. Nach Zusatz von 55,3 g Tetraethylsilikat wurde die Lösung dann bei der gleichen Temperatur unter Anlegen von Vakuum eingedampft und der verbleibende Rückstand analog Beispiel 11 weiterbehandelt. Es konnten 111,3 g (78,4% der bei vollständiger Oxidation zu erwartenden Menge) mit einer $H^+$-Kapazität von 1,51 meq/g erhalten werden.

| Analysendaten: | % C | % H | % S | % Si |
|---|---|---|---|---|
| Theorie bei vollständiger Oxidation: | 35,94 | 3,39 | 11,99 | 15,76 |
| Gefunden: | 39,72 | 4,23 | 13,22 | 15,12 |

Beispiel 13

200 g eines Organopolysiloxans, bestehend aus Einheiten der Summenformel

$S_2[CH_2CH_2CH_2SiO_{3/2}]_2$

wurden in 2 l einer Wasser/Ethanol-Mischung (1 : 1) mit einem Gehalt von insgesamt 215 g Perpropionsäure, suspendiert. Nach 8stündigem Rühren, nachdem eine klare Lösung entstanden war, wurden 240 g 40 %iges Kieselsäuresol (»Ludox 40«) zugesetzt und das Lösungsmittelgemisch und ein Teil der Säure bei 20 mbar und bis zu einer Temperatur von 150°C im Sumpf abdestilliert. Der verbleibende Feststoff wurde mit kaltem Ethanol mehrmals ausgewaschen, 12 Stunden bei 150°C getrocknet und 48 Stunden bei 300°C/100 mbar getempert, dann 5 Stunden mit 1 n HCl-Lösung am Soxhlet extrahiert und erneut 6 Stunden bei 150°C getrocknet. Es ließen sich 260,5 g (69,9 % der bei vollständiger Oxidation zu erwartenden Menge) Produkt mit einer $H^+$-Kapazität von 1,90 meq/g erhalten.

| Analysendaten: | % C | % H | % S | % Si |
|---|---|---|---|---|
| Theorie bei vollständiger Oxidation: | 15,31 | 3,00 | 13,62 | 23,87 |
| Gefunden: | 18,22 | 3,67 | 14,99 | 23,15 |

Beispiel 14

Ein analoger Versuch wie in Beispiel 12 mit dem Unterschied, daß anstelle von Tetraethylsilikat 162 g 20 %ige Wasserglaslösung vor dem Eindampfen zugesetzt wurden und der getemperte Feststoff vor dem Extrahieren 3 × 1 Stunde in 300 ml 2 n HCl-Lösung gerührt wurde, ergab 114,2 g Produkt mit einer $H^+$-Kapazität von 1,63 meq/g.

| Analysendaten: | % C | % H | % S | % Si |
|---|---|---|---|---|
| Theorie bei vollständiger Oxidation: | 35,94 | 3,39 | 11,99 | 15,76 |
| Gefunden: | 39,22 | 4,17 | 13,04 | 17,26 |

Beispiel 15

1 g des gemäß Beispiel 1 hergestellten, Sulfonatgruppen-enthaltenden Organopolysiloxans, mit $H^+$ als Gegenion und einer Kapazität von 2,8 meq/g wurde 0,5 Stunden in 40 ml 0,1 n methanolischer NaOH-Lösung gerührt. Anschließend wurde der Feststoff von der überstehenden Lösung abfiltriert und mit insgesamt 100 ml Methanol laugefrei gewaschen. Das feuchte Material wurde dann in 20 ml 0,5 n HCl-Lösung überführt, 15 min. gerührt und abzentrifugiert. Nach 2maliger Wiederholung dieses letzten Schrittes wurde der Feststoff mit insgesamt 100 ml Methanol säurefrei gewaschen und 5 Stunden bei 120°C/100 mbar getrocknet. Die verbliebenen Säurelösungen und Waschmethanol wurden vereinigt und eine Bestimmung des Na-Gehalts durchgeführt. Gemäß dieser Analyse waren bei der HCl-Behandlung 58,6 mg $Na^+$ freigesetzt worden, d. h. rund 91 % der theoretischen Kapazität. Entsprechend ergab eine erneute Titration des getrockneten Feststoffs mit 0,1 n NaOH eine wiederum vorhandene $H^+$-Kapazität von ca. 2,7 meq/g.

Beispiel 16

1 g des gemäß Beispiel 3 hergestellten Sulfonatgruppen-enthaltenden, vernetzten Organopolysiloxans mit einer Korngröße von 0,05—00,2 mm und einer $H^+$-Kapazität von 1,41 meq/g wurde 0,5 Stunden in 20 ml 0,1 n NaOH gerührt.

Anschließend wurde abfiltriert und der Feststoff mit insgesamt 60 ml $H_2O$ ausgewaschen. Gemäß Rücktitration des mit der Waschflüssigkeit vereinigten Filtrats mit 0,1 n HCl lag der Ionenaustauscher jetzt zu rund 100 % in der $Na^+$-Form vor. Der ungetrocknete Feststoff wurde dann in 20 ml 0,1 n $CuSO_4$-Lösung suspendiert und ebenfalls 0,5 Stunden gerührt, dann abfiltriert und nochmals in 20 ml 0,1 n $CuSO_4$-Lösung suspendiert sowie gerührt. Der abfiltrierte, gewaschene und getrocknete Feststoff (insgesamt 1,07 g) wurde dann auf seinen Gehalt an $Cu^{2+}$ untersucht. Gemäß dieser Analyse waren insgesamt 43 mg $Cu^{2+}$ gebunden, was 1,35 meq entspricht. In den vereinigten Rest-$CuSO_4$-Lösungen und Waschlösungen wurde als Gegenprobe die Gesamt-$Na^+$-Menge zu 31,5 mg bestimmt, was 1,37 meq entspricht.

## Beispiel 17

5 g des gemäß Beispiel 5 hergestellten Sulfonatgruppen-enthaltenden Organopolysiloxans mit einer Korngröße von 0,05—0,2 mm wurden 3 mal in je 50 ml 0,5 n $CaCl_2$-Lösung jeweils 0,5 Stunden lang gerührt, dann abfiltriert und mit insgesamt 150 ml $H_2O$ gewaschen. Die hierbei freigesetzte vereinigte HCl-Menge wurde zu 323 mg (99,5 % d. Theorie) bestimmt. Der nun mit $Ca^{2+}$ beladene Ionenaustauscher wurde anschließend 3 mal in je 50 ml 0,5 n $FeCl_3$-Lösung jeweils 0,5 Stunden lang gerührt, am Ende wiederum abfiltriert und mit insgesamt 150 ml $H_2O$ gewaschen. In den vereinigten Filtraten und Waschflüssigkeiten wurde die insgesamt freigesetzte $Ca^{2+}$-Menge zu 171 mg bestimmt, was 95,8 % der bei 100 %iger Beladung und Freisetzung zu erwartenden Menge entspricht. Der mit $Fe^{3+}$ beladene Ionenaustauscher wurde anschließend 3 mal in je 50 ml 0,5 n HCl-Lösung jeweils 0,5 Stunden lang gerührt, am Ende wiederum abfiltriert und mit insgesamt 150 ml $H_2O$ gewaschen.

Die dabei freigesetzte $Fe^{3+}$-Menge wurde zu 157 mg bestimmt, was ca. 95 % der bei 100 %iger Beladung und Freisetzung zu erwartenden Menge entspricht.

Eine abschließende Bestimmung der $H^+$-Kapazität des getrockneten Materials ergab einen Wert von 1,73 meq/g.

## Beispiel 18

5 g des in der $Na^+$-Form vorliegenden Sulfonatgruppen-enthaltenden Organopolysiloxans aus Beispiel 11 mit einer Korngröße von <0,05 mm und einer $Na^+$-Kapazität von 1,92 meq/g wurden analog Beispiel 17 3 mal in je 50 ml 0,5 n Silbernitratlösung jeweils 0,5 Stunden lang gerührt, danach mit insgesamt 150 ml $H_2O$ ausgewaschen und eine Bestimmung der freigesetzten $Na^+$-Menge bzw. der noch vorhandenen $Ag^+$-Menge durchgeführt. Danach waren insgesamt 207 mg $Na^+$ (94 % der Gesamtkapazität) in Lösung gegangen und 984 mg $Ag^+$ (95 % der Gesamtkapazität) an den Feststoff gebunden worden.

Das mit $Ag^+$ beladene Austauschermaterial wurde im Anschluß daran wie vorstehend beschrieben, 3 mal mit je 30 ml 0,5 n $MnSO_4$-Lösung behandelt, dann mit insgesamt 150 ml $H_2O$ gewaschen und 6 Stunden bei 150°C/100 mbar getrocknet. Eine Analyse der Feststoffe ergab einen $Mn^{2+}$-Gesamtgehalt von 240 mg (91 % der Gesamtkapazität). In den vereinigten Restlösungen wurden insgesamt 953 mg $Ag^+$ (92 % der Gesamtkapazität) gefunden.

## Beispiel 19

20 g des gemäß Beispiel 10 hergestellten Sulfonatgruppenhaltigen Organopolysiloxans mit einer Korngröße von 0,4—0,6 mm und einer $H^+$-Kapazität von 1,95 meq/g wurden in eine Glassäule mit Frittenboden und einem Innendurchmesser von 15 mm eingeschlämmt, ohne daß eine Volumenzunahme infolge Quellung beobachtet wurde. Anschließend wurde die Säule in 5 Portionen mit insgesamt 200 ml 0,5 n Zinksulfat-Lösung über einen Zeitraum von insgesamt 2 Stunden beschickt und dann die Säule mit 0,5 l $H_2O$ gewaschen. Eine Titration der freigesetzten Säure ergab eine Gesamtmenge von 38 meq $H^+$ (97,4 % der gefundenen Kapazität). Der jetzt in der $Zn^{2+}$-Form vorliegende Ionenaustauscher wurde anschließend mit 250 ml 0,5 n $CoCl_2$-Lösung in wiederum 5 Portionen über einen Zeitraum von insgesamt 2 Stunden beschickt und dann die Säule mit 0,5 l $H_2O$ gewaschen. Eine Bestimmung des $Zn^{2+}$-Gehalts der vereinigten Lösungen ergab eine Gesamtmenge von 2259 mg (90 % der theoretischen Kapazität).

## Beispiel 20

20 g des gemäß Beispiel 11 hergestellten, Sulfonatgruppen-haltigen Organopolysiloxans mit einer Korngröße von 0,2—0,4 mm, vorliegend in der $Na^+$-Form, mit einer $Na^+$-Kapazität von 1,92 meq/g, wurden in eine Glassäule mit Frittenboden und einem Innendurchmesser von 15 mm eingeschlämmt.

Dann wurde die Säule mit 100 ml einer Lösung mit einem $Cd^{2+}$-Gehalt von insgesamt 112,4 mg innerhalb von 1 Stunde und anschließend mit 100 ml einer Lösung mit einem Hg1$^{2+}$-Gehalt von insgesamt 200,6 mg innerhalb einer weiteren Stunde beschickt und dann mit 300 ml $H_2O$ nachgewaschen.

In dem Durchlauf konnten dann weder $Cd^{2+}$, noch $Hg^{2+}$ nachgewiesen werden. Die freigesetzte Säure entsprach in etwa der gebundenen Schwermetallmenge.

Im Anschluß daran wurde die Säule in 5 Portionen mit insgesamt 200 ml 2 n HCl-Lösung beschickt und mit 0,5 l $H_2O$ nachgewaschen. Im Durchlauf wurde eine $Cd^{2+}$- und eine $Hg^{2+}$-Bestimmung durchgeführt, wobei 89,5 %des eingesetzten $Cd^{2+}$ und 91,3 %des eingesetzten $Hg^{2+}$ wiedergerfunden werden konnten.

**Patentansprüche**

1. Organopolysiloxane, dadurch gekennzeichnet, daß sie gleiche oder verschiedene Einheiten der allgemeinen Formel

$$(O_{3/2}Si—R^1—SO_3^-)_x M^{x+} \qquad (1)$$

enthalten, in der $R^1$ für eine lineare oder verzweigte Alkylengruppe mit 1 bis 12 C-Atomen, eine Cycloalkylengruppe mit 5 bis 8 C-Atomen oder für Einheiten

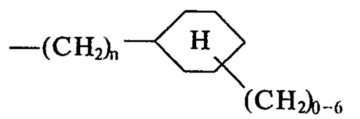

bzw.

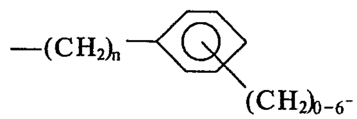

steht, in denen n eine Zahl von 1 bis 6 sein kann und die Zahl der Schwefel-ständigen Methylengruppen angibt, x in Abhängigkeit von M eine Zahl von 1—4 bedeutet und M für Wasserstoff oder ein 1- bis 4wertiges Metallion steht und die freien Valenzen der Sauerstoffatome durch Siliciumatome weitere Gruppen der Formel (1) und/oder durch vernetzende Brückenglieder

$SiO_{4/2}$ oder $R'SiO_{3/2}$ oder $R'_2SiO_{2/2}$ bzw.

$TiO_{4/2}$ oder $R'TiO_{3/2}$ oder $R'_2TiO_{2/2}$ bzw.

$AlO_{3/2}$,

wobei R' eine Methyl- oder Ethylgruppe ist und/oder durch Di-, Tri- und Tetrasulfideinheiten der allgemeinen Formel

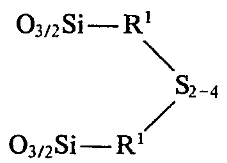

(2)

in der die Brückenglieder $R^1$ denselben Bedeutungsumfang wie bei Formel (1) haben und gleich oder verschieden sein können, abgesättigt sind, und das Verhältnis der Summe der Si-Atome in Formel (1) und (2) zu den Brückenatomen Silicium, Titan und Aluminium 1 : 0 bis 1 : 10 betragen kann.

2. Organopolysiloxane nach Anspruch 1, dadurch gekennzeichnet, daß, wenn $M^{x+} = H^+$ eine Kapazität von mindestens 0,1 meq $H^+$/g Organopolysiloxan bis höchstens 3,5 meq $H^+$/g Organopolysiloxan gegeben ist.

3. Organopolysiloxane gemäß Anspruch 1 oder 2, bei denen im Polymerverband bezüglich $R^1$ gleiche Einheiten nach Formeln (1) und (2) vorhanden sind.

4. Organopolysiloxane gemäß Anspruch 3, bei denen $R^1$ für eine Propylengruppe steht.

5. Organopolysiloxane gemäß Ansprüchen 1—4, bei denen $M^{x+}$ für $H^+$ steht.

6. Organopolysiloxane gemäß Ansprüchen 1—5, bei denen die freien Valenzen der Sauerstoffatome der Einheiten nach Formel (1) durch weitere Gruppen der Formel (1) und/oder durch vernetzende Brükkenglieder gemäß Anspruch 1 und/oder durch Disulfideinheiten

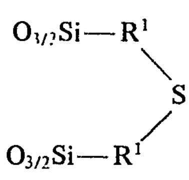

abgesättigt sind.

7. 1stündige bis 4tägige, bei Temperaturen von 150°C bis 450°C, gegebenenfalls unter Verwendung von Vakuum getemperte Organopolysiloxane gemäß Ansprüchen 1–6.

8. Verfahren zur Herstellung von Organopolysiloxanen gemäß Ansprüchen 1–7, dadurch gekennzeichnet, daß polymere Di-, Tri oder Tetrasulfide, bestehend aus Einheiten der Formel

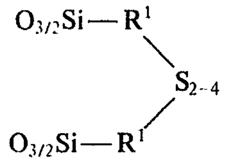

(2)

bei denen die beiden Gruppen $R^1$ gleiche oder verschiedene Bedeutung haben und für eine lineare oder verzweigte Alkylengruppe mit 1 bis 12 C-Atomen, eine Cycloalkylengruppe mit 5–8 C-Atomen oder für Einheiten

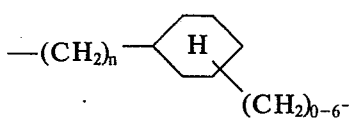 bzw. 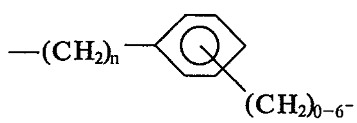

stehen, in denen n eine Zahl von 1 bis 6 sein kann und die Zahl der Schwefel-ständigen Methylengruppen angibt, und die freien Valenzen der Sauerstoffatome durch Siliciumatome weiterer Gruppen der Formel (2) und/oder durch vernetzende Brückenglieder

$SiO_{4/2}$ oder $R'SiO_{3/2}$ oder $R'_2SiO_{2/2}$ bzw.

$TiO_{4/2}$ oder $R'TiO_{3/2}$ oder $R'_2TiO_{2/2}$ bzw.

$AlO_{3/2}$,

abgesättigt sind,
wobei R' eine Methyl- oder Ethylgruppe ist, suspendiert in Wasser und/oder einem Alkohol mit 1 bis 5 C-Atomen, mit stöchiometrischen, unterschüssigen oder überschüssigen Mengen, im letzten Fall bis zur 20fachen der zur vollständigen Oxidation benötigten Menge, eines zumindest teilweise gelösten Oxidationsmittels, dessen Oxidationspotential mindestens ausreicht, um C-gebundenen Schwefel der formalen Oxidationsstufe −1 in C-gebundenen Schwefel der formalen Oxidationsstufe +4 zu überführen, bei Temperaturen von −78 bis 250, vorzugsweise −30 bis 150, insbesondere 0 bis 100°C und einem pH-Wert von höchstens 11, während einiger Minuten bis mehrerer Tage, gegebenenfalls unter einem Druck, welcher der Summe der Partialdrücke der Reaktionskomponenten bei der Reaktionstemperatur entspricht, umgesetzt werden, worauf der Feststoff von der flüssigen Phase abgetrennt, extrahiert oder gewaschen, dann gegebenenfalls unter Vakuum, bei Temperaturen von Raumtemperatur bis 200°C getrocknet und 1 Stunde bis 4 Tage, gegebenenfalls im Vakuum, bei Temperaturen von 150–450°C getempert wird, wobei Extraktion bzw. Wäsche und Trocknung sowie bedarfsweise die Temperung gegebenenfalls wiederholt werden und daß das Produkt schließlich bei bzw. nach Bedarf gemahlen und/oder klassifiziert sowie nachgetempert wird, wobei eine oder mehrere der nach der Umsetzung vorgesehenen Maßnahmen unterbleiben oder in einer anderen Reihenfolge durchgeführt werden können.

9. Verfahren gemäß Anspruch 8, dadurch gekennzeichnet, daß die polymeren Di-, Tri- oder Tetrasulfide mit einer Lösung von stöchiometrischen, unterschüssigen oder überschüssigen Mengen, im letzten Fall bis zur 20fachen der zur vollständigen Oxidation benötigten Menge, eines Oxidationsmittels, dessen Oxidationspotential mindestens ausreicht, um C-gebundenen Schwefel der formalen Oxidationsstufe −1 in C-gebundenen Schwefel der formalen Oxidationsstufe +4 zu überführen, in Wasser oder einem Alkohol mit 1 bis 5 C-Atomen benetzt und bei Temperaturen von −78 bis 250, vorzugsweise −30 bis 150, insbesondere 0 bis 100°C, während einiger Minuten bis mehrerer Tage, gegebenenfalls unter Vakuum, umgesetzt werden, worauf der Feststoff, gegebenenfalls unter Vakkum, bei Temperaturen von Raumtemperatur bis 200°C getrocknet und 1 Stunde bis 4 Tage, gegebenenfalls im Vakuum, bei Temperaturen von 150 bis 450°C getempert wird und daß das Produkt gegebenenfalls anschließend gemahlen und/oder klassifiziert sowie, gegebenenfalls ein- oder mehrmals mit Wasser oder einem Alkohol mit 1 bis 5 C-Atomen extrahiert oder gewaschen und getrocknet und/oder nachgetempert wird, wobei eine oder mehrere der nach der Umsetzung vorgesehenen Maßnahmen unterbleiben oder in einer anderen Reihenfolge durchgeführt werden können.

10. Verfahren zur Herstellung der Organopolysiloxane gemäß Ansprüchen 1–7, dadurch gekennzeichnet, daß polymere Di-, Tri- oder Tetrasulfide, bestehend aus Einheiten der Formel

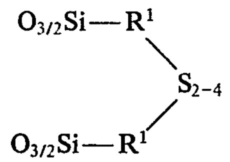 (2)

bei denen die beiden Gruppen $R^1$ gleiche oder verschiedene Bedeutung haben und für eine lineare oder verzweigte Alkylengruppe mit 1 bis 12 C-Atomen, eine Cycloalkylengruppe mit 5—8 C-Atomen oder für Einheiten

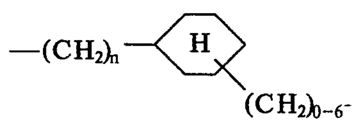 bzw. 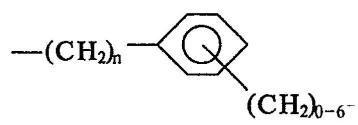

stehen, in denen n eine Zahl von 1 bis 6 sein kann und die Zahl der Schwefel-ständigen Methylengruppen angibt, und die freien Valenzen der Sauerstoffatome durch Siliciumatome weiterer Gruppen der Formel (2) und/oder durch vernetzende Brückenglieder

$SiO_{4/2}$ oder $R'SiO_{3/2}$ oder $R'_2SiO_{2/2}$ bzw.

$TiO_{4/2}$ oder $R'TiO_{3/2}$ oder $R'_2TiO_{2/2}$ bzw.

$AlO_{3/2}$,

abgesättigt sind, wobei R' eine Methyl- oder Ethylgruppe ist, suspendiert in Wasser und/oder einem Alkohol mit 1 bis 5 C-Atomen, mit stöchiometrischen, unterschüssigen oder überschüssigen Mengen, im letzten Fall bis zur 20fachen der zur vollständigen Oxidation benötigten Menge, eines Oxidationsmittels, dessen Oxidationspotential mindestens ausreicht, um C-gebundenen Schwefel der formalen Oxidationsstufe —1 in C-gebundenen Schwefel der formalen Oxidationsstufe +4 zu überführen, bei Temperaturen von —78 bis 250, vorzugsweise —30 bis 150, insbesondere 0 bis 100°C, während einiger Minuten bis mehrerer Tage, gegebenenfalls unter einem Druck, welcher der Summe der Partialdrücke der Reaktionskomponenten bei der Reaktionstemperatur entspricht, umgesetzt werden, die erhaltene Suspension oder Lösung, gegebenenfalls nach Zusatz von Tetramethyl- oder Tetraethylsilikat, Kieselsäuresol oder Wasserglas in einer Menge von 10 bis 300 Gew.-%, bezogen auf die Menge des eingesetzten, gegebenenfalls vernetzten Sulfids, bei Temperaturen von Raumtemperatur bis 150°C, vorzugsweise unter Vakuum, eingedampft, der verbleibende Feststoff, gegebenenfalls im Vakuum, bei Temperaturen von Raumtemperatur bis 200°C getrocknet und 1 Stunde bis 4 Tage, gegebenenfalls im Vakuum, bei Temperaturen von 150 bis 450°C getempert wird, worauf mit Wasser oder wäßriger Säurelösung und/oder einem Alkohol mit 1 bis 5 C-Atomen, vorzugsweise bei erhöhter Temperatur, extrahiert, dann, gegebenenfalls unter Vakuum, getrocknet sowie gegebenenfalls gemahlen und/oder klassifiziert sowie nachgetempert werden kann, wobei eine oder mehrere der auf den Eindampfvorgang folgenden Maßnahmen unterbleiben oder in einer anderen Reihenfolge durchgeführt werden können.

11. Verfahren nach den Ansprüchen 8—10, dadurch gekennzeichnet, daß die Oxidation der Di-, Tri- oder Tetrasulfidgruppen mit Wasserstoffperoxid, Natriumperoxid, Natriumpersulfat, Natriumchlorit, Natriumhypochlorit, Brom oder Bromwasser oder anorganischen oder organischen Persäuren oder einem Gemisch von Wasserstoffperoxid mit Säuren oder anorganischen oder organischen Persäuren vorgenommen wird.

12. Verfahren zur Herstellung der Verbindungen gemäß Ansprüchen 8—11, dadurch gekennzeichnet, daß man die hergestellten ungetrockneten, getrockneten und/oder getemperten, gemahlenen, ungemahlenen und/oder klassifizierten, Sulfonatgruppen-tragenden Organopolysiloxane mit einem anorganischen oder organischen Reagenz, welches in ein Kation und ein Anion dissoziieren kann, zum gegenseitigen Austausch der Kationen nach dem statischen oder dynamischen Ionenaustauscherprinzip umsetzt, anschließend wäscht und dann gegebenenfalls den Feststoff von der flüssigen Phase abtrennt und gegebenenfalls trocknet sowie in beliebiger Reihenfolge mahlt und/oder klassifiziert und tempert.

13. Verfahren nach Anspruch 12, dadurch gekennzeichnet, daß man den Ionenaustausch in einer bewegten Suspension der Ausgangsverbindung mit dem zumindest teilweise gelösten dissoziationsfähigen Reagenz durchführt oder die Ausgangsverbindung als Austauscherbett mit der Lösung des zumindest teilweise gelösten Reagenzes in Kontakt bringt.

14. Verwendung der Sulfonatgruppen-tragenden Organopolysiloxane als starksaure Kationenaustauscher.

## Claims

1. Organopolysiloxanes, characterised in that they contain the same or different units of the general formula

$$(O_{3/2}Si—R^1—SO_3^-)_x M^{x+} \quad (1)$$

wherein $R^1$ represents a straight or branched alkylene group having from 1 to 12 carbon atoms a cycloalkylene group having from 5 to 8 carbon atoms or the units

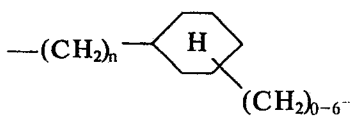 or 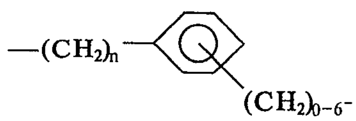

wherein n can be a number from 1 to 6 and represents the number of the methylene groups linked to sulphur, x represents, dependent on M, a number from 1 to 4 an M represents hydrogen or a 1 to 4 valent metal ion and the free valences of the oxygen atoms are saturated by silicon atoms of further groups of the formula (I) and/or by cross-linking bridge members

$SiO_{4/2}$ or $R'SiO_{3/2}$ or $R'_2SiO_{2/2}$ or

$TiO_{4/2}$ or $R'TiO_{3/2}$ or $R'_2TiO_{2/2}$ or

$AlO_{3/2}$,

wherein R' is a methyl or ethyl group and/or are saturated by di-, tri- and tetrasulphide units of the general formula

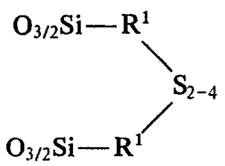

(2)

wherein the bridge members $R^1$ have the same meanings as given in formula (1) and can be the same or different, and the ratio of the sum of the Si atoms in formulae (1) and (2) to the bridge atoms silicon, titanium and aluminium can be from 1 : 0 to 1 : 10.

2. Organopolysiloxanes according to claim 1, characterised in that when $M^{x+} = H^+$, a capacity of at least 0.1 meq $H^+$/g of organopolysiloxane to at most 3.5 meq $H^+$/g of organopolysiloxane is provided.

3. Organopolysiloxanes according to claim 1 or 2, in which the same units according to formulae (1) and (2) are present in the polymer link designated $R^1$.

4. Organopolysiloxanes according to claim 3, in which $R^1$ represents a propylene group.

5. Organopolysiloxanes according to claims 1 to 4 in which $M^{x+}$ represents $H^+$.

6. Organopolysiloxanes according to claims 1 to 5, in which the free valences of the oxygen atoms of the units according to formula (1) are saturated by further groups of the formula (1) and/or crosslinking bridge members according to claim 1 and/or by dusulphide units

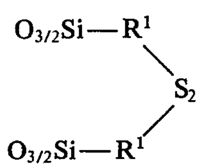

7. Organopolysiloxanes according to claims 1 to 6, annealed for 1 hour to 4 days, at temperatures from 150°C to 450°C, optionally under vacuum.

8. A process for the production of organopolysiloxanes according to claims 1 to 7, characterised in that polymeric di-, tri- or tetrasulphides, consisting of units of the formula

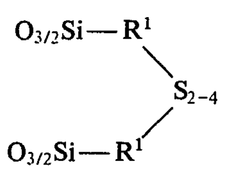

(2)

wherein the two groups $R^1$ are the same or different and represent a straight or branched alkylene group having from 1 to 12 carbon atoms, a cycloalkylene group having from 5 to 8 carbon atoms or the units

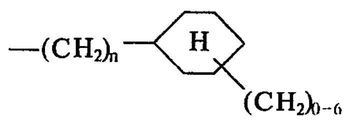 or 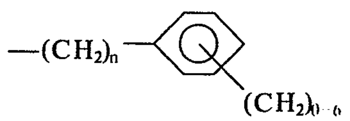

wherein n can be a number from 1 to 6 and represents the number of the methylene groups linked to sulphur, and the free valences of the oxygen atoms are saturated by silicon atoms of further groups of the formula (2) and/or by cross-linking bridge members

$SiO_{4/2}$ or $R'SiO_{3/2}$ or $R'_2SiO_{2/2}$ or

$TiO_{4/2}$ or $R'TiO_{3/2}$ or $R'_2TiO_{2/2}$ or

$AlO_{3/2}$,

wherein R' is a methyl or ethyl group suspended in water and/or an alcohol having from 1 to 5 carbon atoms, are reacted with the stoichiometric quantity or with less than or more than the stoichiometric quantity (in the latter case up to 20 times the quantity required for complete oxidation) of an oxidizing agent which is at least partially dissolved, the oxidation potential of the oxidizing agent being at least sufficient to convert carbonbound sulphur of the formal oxidation stage −1 to carbon-bound sulphur of the formal oxidation stage +4 at temperatures from −78 to 250, preferably from −30 to 150, particularly from 0 to 100°C and at a pH of up to 11, over a period of a few minutes to several days, optionally under a pressure which corresponds to the sum of the partial pressure of the reaction components at the reaction temperature following which the solids are separated from the liquid phase, extracted or washed, and then dried optionally under vacuum, at temperatures from room temperature to 200°C and annealed for 1 hours to 4 days, optionally under vacuum, at temperatures from 150 to 450°C, with extraction or washing and drying as well as annealing as required, optionally being repeated, and the product ist finally ground and/or classified as well as subsequently annealed as and when required, it being possible for one or more of the measures prescribed after reaction to be omitted or the measures to be carried out in a different order.

9. A process according to claim 8, characterised in that the polymeric di-, tri-, or tetrasulphides moistened with water or an alcohol having from 1 to 5 carbon atoms, are reacted with a solution of the stoichiometric quantity or with less than or more than the stoichiometric quantity, (in the latter case up to 20 times the quantity required for complete oxidation) of an oxidizing agent, the oxidation potential of which is at least sufficient to convert carbon-bound sulphur of the formal oxidation stage −1 to carbon-bound sulphur of the formal oxidation stage +4), at a temperature from −78 to 250, preferable from − 30 to 150, particularly from 0 to 100°C, for a period of a few minutes to several days, optionally under vacuum, following which the solids are dried, optionally under vacuum, at temperatures from room temperature to 200°C, and are annealed for 1 hour to 4 days, optionally under vacuum, at temperatures from 150 to 450°C and the product is optionally subsequently ground and/or classified as well as extracted or washed one or more times with water or an alcohol having from 1 to 5 carbon atoms and dried and/or subsequently annealed, it being possible for one more of the measures prescribed after reaction to be omitted or carried out in a different order.

10. A process for the production of organopolysiloxanes according to claims 1 to 7, characterised in that polymeric di-, tri-, or tetrasulphides, consisting of units of the formula

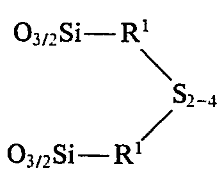 (2)

wherein the two groups $R^1$ are the same or different and represent a straight or branched alkylene group having from 1 to 12 carbon atoms, a cycloalkylene group having from 5 to 8 carbon atoms or the units

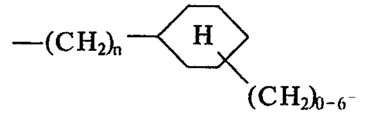 or 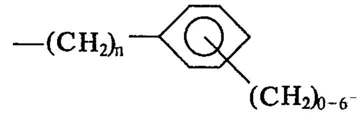

wherein n can be a number from 1 to 6 and represents the number of methylene groups linked to sulphur, and the free valences of the oxygen atoms are saturated by silicon atoms of further groups of the formula (2) and/or by cross-linking bridge members

$SiO_{4/2}$ or $R'SiO_{3/2}$ or $R'_2SiO_{2/2}$ or

$TiO_{4/2}$ or $R'TiO_{3/2}$ or $R'_2TiO_{2/2}$ or

$AlO_{3/2}$,

wherein R' is a methyl or ethyl group suspended in water and/or an alcohol having from 1 to 5 carbon atoms, are reacted with the stoichiometric quantity or with less than or more than the stoichiometric quantity (in the latter case up to 20 times the quantity required for complete oxidation) of an oxidizing agent, the oxidation potential of which is at least sufficient to convert carbon-bound sulphur of the formal oxidation stage −1 to carbon-bound sulphur of the formal oxidation stage +4 at temperatures from −78 to 250, preferably from −30 to 150, particularly from 0 to 100°C, over a period of a few minutes to several days, optionally under a pressure which corresponds to the sum of the partial pressure of the reaction components at the reaction temperature, the suspension or solution which is obtained evaporated optionally after addition of tetramethyl- or tetraethyl silicate, silica sol or water glass in a quantity from 10 to 300 %by weight, based on the quantity of the optionally cross-linked sulphide used, at temperatures from room temperature to 150°C, preferably under vacuum, the remaining solids are dried, optionally under vacuum, at temperatures from room temperature to 200°C and are annealed from 1 hours to 4 days, optionally under vacuum, at temperatures from 150 to 450°C, whereupon it is extracted with water, aqueous acid solution and/or an alcohol having from 1 to 5 carbon atoms, preferably at elevated temperature, and then dried, optionally under vacuum, as well as optionally ground and/or classified and subsequently annealed, it being possible for one or more of the measures following the evaporation process to be omitted or carried out in a different order.

11. A process according to claims 8 to 10, characterised in that the oxidation of the di-, tri- or tetrasulphide groups is carried out with hydrogen peroxide, sodium peroxide, sodium persulphate, sodium chlorite, sodium hypochlorite, bromine or bromine water or inoganic or organic peracids or a mixture of hydrogen peroxide with acids or inorganic or organic peracids.

12. A process for the production of compounds according to claims 8 to 11, characterised in that the undried, dried and/or annealed, ground, unground and/or classified, sulphonate group-bearing organopolysiloxanes produced are reacted with an inorganic or organic reagent, which can be dissociated in a cation and an anion, for the mutual exchange of cations according to the principle of a static or dynamic ion exchanger, subsequently washed and the solids then optionally seperated from the liquid phase and optionally dried as well as ground and/or classified and annealed in the cesired order.

13. A process according to claim 12, characterised in that the ion exchange is carried out in an agitated suspension of the starting compound with the at least partially dissolved reagent which is capable of dissociation, or the starting compound as exchanger bed is brought into contact with a solution of the at least partially dissolved reagent.

14. Use of sulphonate group-bearing organopolysiloxanes as strongly acidic cation exchanges.

**Revendications**

1. Organopolysiloxanes caractérisés en ce qu'ils contiennent des unités identiques ou différentes, de formule générale:

$$(O_{3/2}Si—R^1—SO_3^-)_x M^{x+} \quad (1)$$

dans laquelle $R^1$ représente un group alcolyle linéaire ou ramifié avec 1 à 12 atomes de C, un groupe cycloalcoylène avec 5 à 8 atomes de C ou comme autres unités:

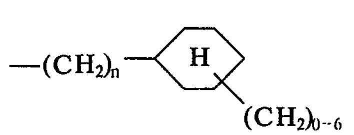

bzw.

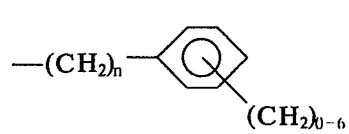

dans lesquelles n peut être un nombre compris entre 1 et 6 et donne le nombre des groupes méthylène porteurs de soufre, x représente, en fonction de M, un nombre de 1 à 4 et M, de l'hydrogène ou un ion métallique de mono à tétravalent, et les valeurs libres des atomes d'oxygène sont saturées par des atomes de silicium d'autres groupes de formule (1) et/ou par des ponts réticulants:

| | | | | | |
|---|---|---|---|---|---|
| $SiO_{4/2}$ | ou | $R'SiO_{3/2}$ | ou | $R'_2SiO_{2/2}$ | ou |
| $TiO_{4/2}$ | ou | $R'TiO_{3/2}$ | ou | $R'_2TiO_{2/2}$ | ou |
| $AlO_{3/2}$, | | | | | |

où R′ est un groupe méthyle ou éthyle et/ou par des unités di-, tri- et tétrasulfurées de formule générale:

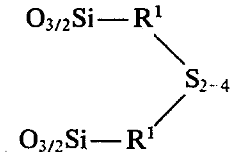

(2)

dans laquelle les éléments de pontage $R^1$ ont la même signification que dans la formule (1) et peuvent être identiques ou différents, et le rapport entre la somme des atomes de Si dans les formules (1) et (2), et les atomes formant pont silicium, titane et aluminium est compris entre 1 : 0 et 1 : 10.

2. Organopolysiloxanes selon la revendication 1, caractérisés en ce que, lorsque $M^{x+} = H^+$, la capacité peut aller d'au moins 0,1 (meq) de $H^+$/g d'organopolysiloxane jusqu'au plus 3,5 meq de $H^+$/g de'organopolysiloxane.

3. Organopolysiloxane selon l'une des revendications 1 ou 2, caractérisés en ce que dans l'assemblage polymère, concernant $R^1$, il existe des unités identiques selon les formules (1) et (2).

4. Organopolysiloxanes selon la revendication 3, caractérisés en ce que $R^1$ représente un groupe propylène.

5. Organopolysiloxanes selon l'une quelconque des revendications 1 à 4, caractérisés en ce que $M^{x+}$ est un $H^+$.

6. Organopolysiloxanes selon l'une quelconque des revendications 1 à 5, caractérisés en ce que les valences libres des atomes d'oxygène des unités selon la formule (1) sont saturées par d'autres groupes de formule (1) et/ou par des éléments formant ponts réticulants selon la revendication 1, et/ou des unités disulfurées:

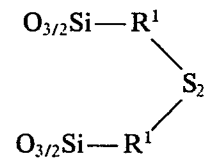

7. Organopolysiloxanes selon l'une quelconque des revendication 1 à 6, caractérisés en ce qu'ils ont subi un traitement thermique d'une heure à quatre jours, à des températures de 150 à 450°C, éventuellement sous vide.

8. Prodédé d'obtention d'organopolysiloxanes selon les revendications 1 à 7, caractérisé en ce que l'on fait réagir des polymères di-, tri- ou tétrasulfurés, constitués d'unités de formule:

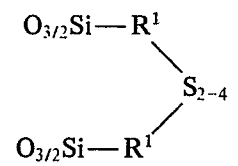

(2)

dans laquelle les deux groupes $R^1$ sont identiques ou différents et représentent un groupe alcoylène linéaire ou ramifié avec 1 à 12 atomes de C, un groupe cycloalcoylène avec 5 à 8 atomes de C ou des unités:

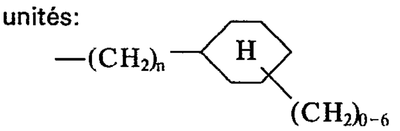

resp.

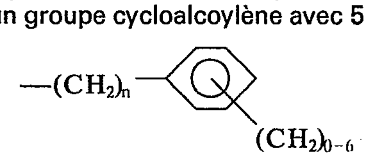

dans lesquelles n est un nombre de 1 à 6 et donne le nombre des groupes méthylène porteurs de soufre, et les valences libres des atomes d'oxygène sont saturées par des atomes de silicium d'autres groupes de formule (2) et/ou par des ponts réticulants.

| | | | | | |
|---|---|---|---|---|---|
| $SiO_{4/2}$ | ou | $R'SiO_{3/2}$ | ou | $R'_2SiO_{2/2}$ | ou |
| $TiO_{4/2}$ | ou | $R'TiO_{3/2}$ | ou | $R'_2TiO_{2/2}$ | ou |
| $AlO_{3/2}$, | | | | | |

où R' est un groupe méthyle ou éthyle, en suspension dans l'eau et/ou un alcool comportant 1 à 5 atomes de C, avec une quantité stoechiomètrique, en défaut ou en excès, dans ce dernier cas jusqu'à 20 fois la quantité nécessaire pour l'oxydation complète, d'un agent oxydant au moins partiellement dissous, dont le potentiel d'oxydation est au moins suffisant pour faire passer le soufre lié au carbone, d'un degré d'oxydation formel de −1, à un degré d'oxydation de +4, à une température de −78 à 250°C, de préférence −30 à 150°C, en particulier de 0 à 100°C, et à un pH d'au plus 11, pendant une durée pouvant aller de quelques minutes à plusieurs jours, éventuellement sous une pression qui correspond à la somme des pressions partielles des composants réactionnels à la température de la réaction, après quoi on sépare la matière solide de la phase liquide, extrait ou lave, puis l'on sèche, éventuellement sous vide, à une température comprise entre la température ambiante et 200°C, et procède à un traitement thermique de 1 heure à 4 jours, éventuellement sous vide, à des températures de 150 à 450°C, l'extraction et le lavage, et le séchage, ainsi que, si nécessaire, le traitement thermique étant éventuellement réitérés, le produit étant enfin, selon le cas, broyé et/ou classifié ainsi que soumis à un post-traitement thermique, une ou plusieurs des mesures prévues après la réaction pouvant être supprimées ou effectuées dans un autre ordre.

9. Procédé selon la revendication 8, caractérisé en ce que l'on fait réagir les polymères di-, tri- ou tétrasulfurés avec une solution d'une quantité stoechiomètrique, en défaut ou en excès, dans ce dernier cas représentant jusqu'à 20 fois la quantité nécessaire à l'oxydation complète, d'un agent oxydant dont le potentiel d'oxydation est au moins suffisant pour faire passer le soufre lié au carbone, d'un degré d'oxydation formel de −1, à un degré d'oxydation de +4, dans l'eau ou dans un alcool avec 1 à 5 atomes de C, à une température de −78 à +250°C, de préférence −30 à 150°C, en particulier 0 à 100°C, pendant une durée de quelques minutes à plusieurs jours, éventuellement sous vide, on fait sécher à une température compromise entre la température ambiante et 200°C, soumet le produit à un traitement thermique de 1 heure à 4 jours, éventuellement sous vide, à une température de 150 à 450°C, et que le produit est ensuit éventuellement broyé et/ou classifié ainsi qu'extrait ou lavé éventuellement une ou plusieurs fois, avec de l'eau ou un alcool avec 1 à 5 atomes de C, et séché et/ou soumis à un post-traitement thermique, une ou plusieurs des mesure prévues après la réaction pouvant être supprimées ou exécutées dans un ordre différent.

10. Procédé pour la fabrication des organopolysiloxanes selon les revendications 1 à 7, caractérisé en ce que l'on fait réagir des polymères di-, tri- ou tétrasulfurés, constitués d'unités de formule:

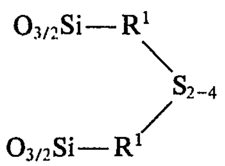

(2)

dans laquelle les deux groupes $R^1$ sont semblables ou différents et représentent un groupe alcoylène linéaire ou ramifié avec 1 à 12 atomes de C, un groupe cycloalcoylène avec 5 à 8 atomes de C ou des unités:

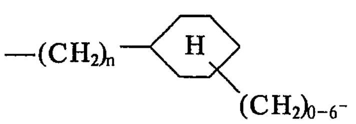

resp.

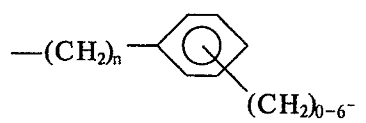

dans lesquelles n est un nombre de 1 à 6 et indique le nombre des groupes méthylène porteurs de soufre, et les valences libres des atomes d'oxygène sont saturées par des atomes de silicium d'autres groupes de formule (2) et/ou par des ponts réticulants:

$SiO_{4/2}$ ou $R'SiO_{3/2}$ ou $R'_2SiO_{2/2}$ ou

$TiO_{4/2}$ ou $R'TiO_{3/2}$ ou $R'_2TiO_{2/2}$ ou

$AlO_{3/2}$.

R' étant un groupe méthyle ou éthyle, en suspension dans l'eau et/ou dans un alcool avec 1 à 5 atomes de C, avec une quantité stoechiomètrique, en défaut ou en excès pouvant aller, dans ce dernier cas, jusqu'à 20 fois la quantité nécessaire à l'oxydation complète, d'un agent oxydant, dont le potentiel d'oxydation est au moins suffisant pour faire passer le soufre lié au carbone, du degré d'oxydation −1, en soufre lié au carbone, à un degré d'oxydation +4, à une température de −78 à 250°C, de préférence −30 à 150°C, en particulier de 0 à 100°C, pendant une durée de quelques minutes à plusieurs jours, eventuellement sous une pression qui correspond à la somme des pressions partielles des composants de la réaction à la température de la réaction, que la solution ou suspension obtenue est concentrée par évaporation, éventuellement après addition de tétraméthyl — ou tétraéthylsilicate, d'un sol de silice

colloïdale de silicate de sodium, dans une proportion de 10 à 300 % en poids, calculée sur la quantité de sulfure mise en oeuvre, éventuellement réticulé, à une température comprise entre la température ambiante et 150°C, de préférence sous vide, que l'on sèche la matière solide restante, éventuellement sous vide, à des températures comprises entre la température ambiante et 200°C, la soumet à un traitement thermique de 1 heure à 4 jours, éventuellement sous vide, à une température de 150 à 450°C, après quoi l'on extrait avec de l'eau ou une solution aqueuse d'acide et/ou un alcool avec 1 à 5 atomes de C, de préférence à température élevée, puis on sèche, éventuellement sous vide, et l'on peut éventuellement broyer et/ou classifier ainsi qu'appliquer un post-traitement thermique, étant entendu qu'une ou plusieurs des mesures à appliquer après l'opération d'èvaporation peuvent être supprimées ou effectuées dans un autre ordre.

11. Procédé selon les revendications 8 à 10, caractérisé en ce que l'oxydation des groupes di-, tri- ou tétrasulfurés s'effectue avec de l'eau oxygénée, du peroxyde de sodium, du persulfate de sodium, du chlorure de sodium, de l'hypochlorite de sodium, du brome ou de l'eau de brome ou des peracides minéraux ou organiques ou un mélange d'eau oxygénée et d'acides ou de peracides minéraux ou organiques.

12. Procédé pour la fabrication de composés selon les revendications 8 à 11, caractérisé en ce que l'on fait réagir l'organopolysiloxane fabriqué portant des groupes sulfonate, non séché, séché et/ou traité thermiquement, broyé, non broyé et/ou classifié, avec un réactif minéral ou organique pouvant se dissocier en un cation et un anion, pour réaliser un échange réciproque des cations, selon le principe des échangeurs d'ions statiques ou dynamiques, qu'ensuite on lave, puis éventuellement on sépare la matière solide de la phase liquide, et éventuellement la sèche et, dans un ordre quelconque, la broie et/ou la classifie et la traite thermiquement.

13. Procédé selon la revendication 12, caractérisé en ce que l'on effectue l'échange d'ions dans une suspension en mouvement du composé de départ, avec le réactif apte à se dissocier, au moins partiellement dissous, ou que l'on met en contact le composé de départ, sous forme de lit échangeur, avec la solution de réactif au moins partiellement dissous.

14. Utilisation des organopolysiloxanes portant des groupes sulfonate, comme échangeurs cationiques fortement acides.